# EUROPÄISCHE PATENTSCHRIFT

(11) **EP 1 600 463 B1**
(45) Veröffentlichungstag und Bekanntmachung des Hinweises auf die Patenterteilung: **19.03.2008**
(21) Anmeldenummer: 05007602.5
(22) Anmeldetag: 07.04.2005
(51) Int. Cl.: C08F 285/00, C08F 2/22, C08L 27/00

(54) **Emulsionscopolymerisate, Verfahren zu ihrer Herstellung und ihre Verwendung als Modifizierungsmittel**
Emulsion copolymerisates, process for producing them and their use as impact modifier
Polymères d'émulsion, procédé pour en préparer et leur application comme agent modifiant la résistance au choc

(30) Priorität: 24.05.2004 DE 102004025860
(43) Veröffentlichungstag der Anmeldung: 30.11.2005
(73) Patentinhaber: BASF SE, 67056 Ludwigshafen (DE)
(72) Erfinder: Amrhein, Patrick, Dr., 65239 Hochheim (DE); Weiss, Axel, Dr., 67346 Speyer (DE); Nolte, Rainer, Dr., 67117 Limburgerhof (DE); Bothe, Marc, Dr., 67117 Limburgerhof (DE); Wildburg, Gerald, Dr., 67346 Speyer (DE)

(56) Entgegenhaltungen:
- DE-A1- 3 901 448
- US-A- 4 173 600
- US-A- 5 273 824
- US-A- 6 111 012

## Beschreibung

Die Erfindung betrifft Emulsionscopolymerisate mit erhöhter thermischer Stabilität bei und nach der Einarbeitung in Polyvinylhalogenidharz Formmassen, die dadurch erhältlich sind, dass man auf ein Emulsionspolymerisat aus vernetztern Polystyrol nacheinander eine weiche, kautschukartige Hülle aus einem vernetzten Alkylacrylat und danach jeweils eine harte Hülle aus Styrol und Alkylmethacrylaten durch Pfropfpolymerisation aufbringt, Verfahren zur Herstellung solcher Emulsionscopolymerisate durch aufeinander folgende Pfropfpolymerisation sowie die Verwendung der Emulsionscopolymerisate als Modifizierungsmittel für transparente Polyvinylhalogenidharz-Formmassen.

Um die Anwendungsbreite von Vinylhalogenidharzmassen, vor allem von Polyvinylchlorid (PVC) zu erweitern, werden den Harzen Modifizierungsmittel zugesetzt, die Verbesserungen bezüglich der Schlagzähigkeit bei Erhalt der Transparenz und Witterungsbeständigkeit bewirken sollen. Als Modifizierungsmittel zur Verbesserung der Schlagzähigkeit von Polyvinylchlorid sind Pfropfcopolymerisate bekannt, bei denen im allgemeinen auf einen kautschukartigen (weichen) Kern (harte) Monomere, deren Homopolymere Glasübergangstemperaturen deutlich über 0°C aufweisen, aufgepfropft sind (Aufbau: weich-hart).

Bei witterungsstabilen PVC-Formmassen werden als Kautschuke vorzugsweise Acrylatkautschuke eingesetzt. Damit die Transparenz des schlagzäh modifizierten Polyvinylchlorids nicht beeinträchtigt wird, verwendet man als Schlagzähmodifier solche Polymerisate, die praktisch den gleichen Brechungsindex haben wie das Polyvinylchlorid. Der volumengemittelte Brechungsindex n_{D} des gesamten Pfropfcopolymerisats weicht dann maximal um " 0,02, insbesondere um " 0,01, vom Brechungsindex der Matrix ab. Die Gewichtsanteile der Monomeren der Pfropfgrundlage und der Monomeren des gesamten Pfropfcopolymerisats werden so gewählt, dass die genannte Bedingung erfüllt ist.

Derartige Polyvinylhalogenidharzmassen sind u.a. aus der US-A-3 763 279 bekannt. Das dort beschriebene Pfropfcopolymerisat hat einen zweistufigen Aufbau mit einer Pfropfgrundlage aus vorwiegend Styrol und einer Pfropfhülle aus vorwiegend Alkylacrylaten. In der DE-A-2 438 402 und der DE-A-2 249 023 werden als Modifizierungsmittel dreistufige Pfropfpolymere beschrieben, bei deren Herstellung auf ein Grundgerüst aus Acrylatkautschuk zunächst eine Hülle aus Methylmethacrylat aufgepfropft wird, woran sich eine Copolymerisation mit Styrol anschließt. Die EP-A-50 848 und die US-A-4 064 197 betreffen dreistufige Pfropfpolymere, auf deren harten Kern aus Polystyrol zunächst ein Dienkautschuk und anschließend eine Hülle aus Alkylmethacrylat aufgepfropft wird.

Weiterhin sind aus der DE-A-2 244 519, der DE-A-2 130 989 und der US-A-3 971 835 Pfropfpolymere bekannt, bei denen ein Polystyrolkern zunächst von einer Hülle aus Acrylatkautschuk umgeben ist, worauf dann in der dritten Stufe Methylmethacrylat aufgepfropft wird. In der DE-A-2 557 828 und der US-A-4 128 605 sind als Modifizierungsmittel vierstufige Pfropfpolymere beschrieben, deren harter Polystyrolkern ebenfalls von einem Acrylatkautschuk umgeben ist, wobei beide Stufen in Gegenwart eines allylgruppenhaltigen Vernetzers polymerisiert werden. Es schließen sich zwei Pfropfstufen an, in denen zuerst Methylmethacrylat und dann Styrol aufgepfropft werden.

In der EP-A-379 086 ist ein vierstufig aufgebautes Modifizierungsmittel zur Verbesserung der Schlagzähigkeit von transparenten PVC-Formmassen beschrieben, das einen prinzipiell anderen Aufbau hat. Auf einen (harten) Kern aus vernetztern Polystyrol sind bei diesem Modifizierungsmittel nacheinander eine weiche, kautschukartige Hülle aus Alkylacrylaten und abschließend wiederum harte Hüllen aus Styrol und Alkylmethacrylaten aufgebracht. (Aufbau: hart-weich-hart).

Aus der EP-A-136 552 ist ein Modifizierungsmittel für PVC mit wiederum andersartigem Aufbau bekannt. Das dort als Modifizierungsmittel zur Verbesserung der Schlagzähigkeit von PVC empfohlene Pfropfcopolymerisat hat einen kautschukartigen Kern, dann zunächst eine Hülle aus "harten" Monomeren und abschließend wieder eine kautschukartige Hülle (Aufbau: weich-hart-weich). Um die Schlagzähigkeit von PVC-Formmassen zu verbessern, wird dieses Pfropfcopolymerisat in Kombination mit einem Copolymeren, das 3 bis 30 Gew.-% einer Säure enthält, eingesetzt.

In der DE-A-41 06 909 werden Pfropfcopolymerisate als Modifizierungsmittel für PVC beschrieben, die die Herstellung opaleszenzfreier, transparenter und witterungsbeständiger Formteile mit hoher Schlagzähigkeit ermöglichen. Diese Pfropfcopolymerisate sind erhältlich durch Emulsionspolymerisation von Monomerengemischen in vier Stufen in der Reihenfolge A-B-C-D, wobei man in Stufe A beispielsweise ein Emulsionscopolymerisat aus 60 bis 80 Gew.-% Styrol und 20 bis 40 Gew.-% Acrylnitril, in Stufe B ein Emulsionscopolymerisat aus 50 bis 75 Gew.-% mindestens eines vinylaromatischen Monomeren und 25 bis 50 Gew.-% eines Alkylacrylats, in Stufe C ein Emulsionspolymerisat aus 60 bis 80 Gew.-% mindestens eines vinylaromatischen Monomeren und 20 bis 40 Gew.-% mindestens eines ethylenisch ungesättigten Nitrils und in Stufe D ein Emulsionscopoylmerisat aus 80 bis 99,9 Gew.-% eines mindestens zweifach ethylenisch ungesättigte Monomeren herstellt.

Aus der EP-A-1 388 549 sind Emulsionscopolymerisate bekannt, die dadurch erhältlich sind, dass man auf ein Emulsionspolymerisat aus vernetztern Polystyrol nacheinander eine weiche, kautschukartige Hülle aus einem vernetzten Alkylacrylat und danach eine harte Hülle aus Methylmethacrylat und Styrol durch Pfropfpolymerisation aufbringt, wobei man zur Herstellung der Emulsionspolymerisate Alkyl- oder Arylsulfonate oder Carboxylate von Alkalimetallen als Emulgatoren in einer Menge von 0,1 bis 3,0 Gew.-%, bezogen auf die Gesamtmenge der eingesetzten Monomeren, verwendet.

Die in der Technik zur Modifikation von PVC eingesetzten Pfropfcopolymerisate sollen der dadurch erhaltenen Mischung u.a. eine gute Schlagzähigkeit, Witterungsstabilität und hohe Transparenz verleihen und eine Streuung des Lichtes, erkennbar an einer Blaufärbung vor schwarzem Hintergrund, wissenschaftlich nachweisbar durch einen negativen b*-Wert bei der Farbmessung, den sogenannten Blaustich, vermeiden. Neben diesen Eigenschaften ist es vor allem wichtig, die thermische Stabilität der zu vierarbeitenden Mischung zu verbessern. Üblicherweise werden dafür bestimmte thermische Stabilisatoren eingesetzt. Durch die Anwesenheit dieser zusätzlichen Additive in der erhaltenen Mischung können aber unerwünschte Wechselwirkungen auftreten, was u.a. die Wirksamkeit der thermischen Stabilisatoren beeinträchtigen kann.

Der Erfindung liegt daher die Aufgabe zugrunde, Emulsionscopolymerisate zur Verfügung zu stellen, die mit Polyvinylhalogenidharzmassen Mischungen ergeben, die sich von den bekannten Mischungen aus Emulsionscopolymerisaten und Polyvinylhalogenidmassen u.a. durch eine verbesserte thermische Stabilität und verbesserte optische Eigenschaften auszeichnen.

Die Aufgabe wird erfindungsgemäß gelöst mit Emulsionscopolymerisaten, die erhältlich sind durch
A. Emulsionspolymerisation von 10 bis 50 Gew.-% eines Monomerengemisches A, das sich mit den Monomerengemischen B, C und D zu insgesamt 100 Gew.-% addiert, aus
   a₁₎ 50 bis 99,99 Gew.-% Styrol oder dessen kernsubstituierten Derivaten (Monomere I)
   a₂₎ 0 bis 5 Gew.-% eines aliphatischen konjugierten Diens mit bis zu 6 C-Atomen (Monomere II)
   a₃₎ 0 bis 49,99 Gew.-% eines C₁-C₁₂-Alkylesters der Acrylsäure oder der Methacrylsäure (Monomere III)
   a₄₎ 0,01 bis 10 Gew.-% eines bi- oder polyfunktionellen nicht konjugierten Monomeren (Monomere IV)
   a₅₎ 0 bis 5 Gew.-% weiterer radikalisch polymerisierbarer Monomere (Monomere V)
   wobei sich die Gew.-% a₁₎ - a₅₎ auf die Gesamtmenge der in Stufe A eingesetzten Monomere beziehen und sich zu insgesamt 100 Gew.-% addieren,
B. daran anschließende Pfropfpolymerisation von 20 bis 80 Gew.-% eines Monomerengemisches B, das sich mit den Monomerengemischen A, C und D zu insgesamt 100 Gew.-% addiert, aus
   b₁₎ 80 bis 99,99 Gew.-% eines C₁-bis C₁₂- Acrylsäureesters (Monomere IIIa)
   b₂₎ 0 bis 5 Gew.-% eines Monomeren II
   b₃₎ 0,01 bis 10 Gew.-% eines Monomeren IV,
   wobei sich die Gew.-% b₁₎ - b₃₎ auf die Gesamtmenge der in Stufe B eingesetzten Monomere beziehen und sich zu insgesamt 100 Gew.-% addieren,
C. eine weitere daran anschließende Pfropfpolymerisation von 5 bis 50 Gew.-% eines Monomerengemisches C, das sich mit den Monomerengemischen A, B und D zu insgesamt 100 Gew.-% addiert, aus
   c₁₎ 51 bis 98,99 Gew.-% eines Monomeren I
   c₂₎ 0,01 bis 10 Gew.-% eines Monomeren IV
   c₃₎ 1 bis 48,99 Gew.-% eines Monomeren III
   c₄₎ 0 bis 5 Gew.-% weiteren radikalisch polymerisierbaren Monomeren, die von den Monomeren I, III und IV verschieden sind,
   wobei sich die Gew.-% c₁₎ - c₄₎ auf die Gesamtmenge der in Stufe C eingesetzten Monomere beziehen und sich zu insgesamt 100 Gew.-% addieren, sowie
D. eine weitere daran anschließende Pfropfpolymerisation von 5 bis 30 Gew.-% eines Monomerengemisches D, das sich mit den Monomerengemischen A, B, und C zu insgesamt 100 Gew.-% addiert, aus
   d₁₎ 80 bis 100 Gew.-% mindestens eines Monomeren III
   d₂₎ 0 bis 20 Gew.-% mindestens eines anderen monoethylenisch ungesättigten Monomeren,
   d₃₎ 0 bis 10 Gew.-% eines Monomeren
   d₄₎ 0 bis 5 Gew.-% eines Monomeren IV
   wobei sich die Gew.-% d₁₎ bis d₄₎ auf die Gesamtmenge der in Stufe D eingesetzten Monomere beziehen und sich zu insgesamt 100 Gew.-% addieren und
   wobei man die Emulsionspolymerisation in Gegenwart von mehr als 0,10 Gew.-%, bezogen auf die insgesamt in den Stufen A bis D eingesetzten Monomeren, mindestens eines Neutralisierungsmittels durchführt,
   wobei die Emulsionspolymerisationen der Stufen A und B auch miteinander vertauscht werden können.

Als Neutralisierungsmittel verwendet man beispielsweise mindestens eine Verbindung aus der Gruppe Natronlauge, Kalilauge, Natriumcarbonat, Kaliumcarbonat, Natriumhydrogencarbonat, Kaliumhydrogencarbonat, Ammoniak, Ammoniumcarbonat, Ammoniumhydrogencarbonat, Amine und Polyamine. Die Neutralisierungsmittel werden z.B. in einer Menge von 0,11 bis 1,0 Gew.-%, vorzugsweise 0,13 bis 0,6 Gew.-%, bezogen auf die insgesamt in den Stufen A bis D eingesetzten Monomeren, angewendet. Man kann ein einziges Neutralisierungsmittel oder auch eine Kombination aus zwei oder mehreren Neutralisierungsmitteln einsetzen, z.B. kann man Natriumhydrogencarbonat und Ammoniak zusammen in mindestens einer Polymerisationsstufe oder voneinander getrennt in verschiedenen Polymerisationsstufen verwenden.

Bevorzugt eingesetzte Neutralisierungsmittel sind Natriumhydrogencarbonat und Ammoniak. Beispiele für geeignete Amine sind Mono-, Di- und Trialkylamine, die einen C₁- bis C₂₂-Alkylrest tragen, der geradkettig, verzweigt, zyklisch oder auch substituiert sein kann. Einzelne Beispiele für solche Amine sind Methylamin, Ethylamin, n-Butylamin, tert.-Butylamin, Cyclohexylamin, n-Octylamin, Decylamin, Palmitylamin, Stearylamin, Dicyclohexylamin, Di-n-butylamin, Diisopropylamin, Trimetyhlamin, Triethylamin, Monoethanolamin, Diethanolamin, Triethanolamin und Morpholin.

Als Polyamine kommen beispielsweise Diethylentriamin, Triethylenteramin, Tetraethylenpentamin, Polyethylenimine mit Molmassen M_{w} bis zu 1 Million, vorzugsweise 1 000 bis zu 750 000 und Vinylamineinheiten enthaltende Polymere wie Polyvinylamine mit Molmassen M_{w} von 200 bis 2 Millionen, vorzugsweise 500 bis 500 000 in Betracht.

Die erfindungsgemäßen Emulsionscopolymerisate sind durch nacheinander ablaufende Emulsionspolymerisationen gemäß den nachstehend beschriebenen Stufen A, B, C und D erhältlich. Dabei können auch die Emulsionspolymerisationen der Stufen A und B miteinander vertauscht werden, wodurch zuerst die Emulsionspolymerisation der Stufe B und anschließend die der Stufe A ausgeführt wird.

### Stufe A:

Als Monomere I eignen sich vor allem Styrol, Vinyltoluol, α- und β-Methylstyrol, α-Butylstyrol, 4n-Butylstyrol sowie 4n-Decylstyrol. Besonders bevorzugt ist dabei Styrol.

Es ist auch möglich, ein Gemisch verschiedener Monomerer I einzusetzen. Die Menge an Monomer I beträgt 50 bis 99,99 Gew.-%, vorzugsweise 70 bis 99 Gew.-%, bezogen auf die Gesamtmenge an Monomeren der Stufe A.

Geeignete aliphatische konjugierte Diene (Monomere II) sind vorzugsweise solche mit 4 - 6 C-Atomen, beispielsweise Isopren, Chloropren oder Butadien. An Dien werden 0 - 5 Gew.-%, vorzugsweise 0 - 4 Gew.-%, bezogen auf die Gesamtmenge der in Stufe A) verwendeten Monomere, eingesetzt.

Zusätzlich können noch 0 - 49,99 Gew.-% eines C₁-C₁₂-Alkylesters der Acrylsäure oder der Methacrylsäure (Monomere III) copolymerisiert werden. Geeignete Monomere III sind beispielsweise i-Butylacrylat, n-Butylacrylat, Methylacrylat, Methylmethacrylat, Ethylacrylat oder Ethylmethacrylat sowie 2-Ethylhexylacrylat. Die Angabe der Gew.-% bezieht sicht dabei auf die Gesamtmenge der Monomeren von Stufe A.

Außerdem können noch 0,01 bis 10 Gew.-%, insbesondere 0,1 bis 5 Gew.-%, bezogen auf die Gesamtmenge an Monomeren der Stufe A eines nicht konjugierten, bi- oder polyfunktioniellen Monomeren IV zugesetzt werden, beispielsweise Acryl- oder Methacrylsäureester mehrwertiger Alkohole wie 1,4-Butandioldiacrylat, Polyvinylether mehrwertiger Alkohole wie Butandioldivinylether oder Acryl- oder Methacrylsäureester ungesättigter Alkohole wie zum Beispiel Allylacrylat oder Allylmethacrylat. Besonders bevorzugt ist dabei Allylmethacrylat.

Daneben können noch 0 - 5 Gew.-% weiterer radikalisch polymerisierbarer Monomere V copolymerisiert werden, beispielsweise Acrylnitril oder Methacrylnitril.

Die Gesamtmenge der eingesetzten Monomere I) bis V) in der Stufe A addiert sich dabei auf 100 %.

Die Polymerisation kann unter den für Emulsionspolymerisationen üblichen Bedingungen der radikalischen Polymerisation durchgeführt werden. Als Initiatoren können wasserlösliche thermisch zerfallende Initiatoren oder Redoxsysteme eingesetzt werden. Geeignete thermisch zerfallende Initiatoren (Radikalstarter) sind beispielsweise Natriumpersulfat, Kaliumpersulfat oder Ammoniumpersulfat. Als Redoxinitiatoren kommen u.a. Systeme wie Wasserstoffperoxid-Eisen-II-chlorid oder t-Butylhydroperoxid-Natriumformaldehydsulfoxylat in Betracht, ferner wasserlösliche Azoverbindungen oder Redoxinitiatoren wie H₂O₂/Ascorbinsäure.

Die Emulsionspolymerisation wird üblicherweise in Anwesenheit von geeigneten Emulgatoren durchgeführt, vgl. EP-A-1 388 549, Seite 6, Zeilen 22 bis 57. Bevorzugt eingesetzte Emulgatoren sind Alkyl- oder Arylsulfonate oder Carboxylate von Alkalimetallen oder Ammoniumverbindungen. Sie werden vorzugsweise in einer Menge von 0,01 bis 3,0 Gew.-%, insbesondere in einer Menge von 0,02 bis 1,9 Gew.-%, bezogen auf die Gesamtmenge des Monomerengemisches der Stufen A, B, C und D, eingesetzt. Die Menge an Emulgator soll möglichst niedrig sein. Sie beträgt beispielsweise höchstens 2,1 Gew.-%, meistens höchstens 2,0 Gew.-%, jeweils bezogen auf die insgesamt in den Stufen A bis D eingesetzten Monomeren. Die Emulsionscopolymerisate enthalten vorzugsweise höchstens 1,9 Gew.-% mindestens eines Emulgators, bezogen auf die insgesamt in den Stufen A bis D eingesetzten Monomeren.

Außer den Alkalimetallsalzen der Alkyl- oder Arylsulfonate und der entsprechenden Carboxylate kommen auch die Ammoniumsalze dieser Verbindungen in Betracht. Besonders bevorzugt sind dabei insbesondere die Alkyl- oder die Arylsulfonate des Natriums, des Kaliums und des Ammoniums.

Besonders geeignet sind Alkalimetall- oder aber Ammoniumverbindungen von C₄-C₂₀-Alkylsulfonaten, insbesondere C₁₀-C₁₈-Alkylsulfonaten, wie zum Beispiel das Produkt K30 der Firma Bayer. Zu den bevorzugten Alkylsulfonaten zählen u.a. auch C₅-C₂₅-Alkylester von sulfonierten Carbonsäuren, beispielsweise Sulfobernsteinsäuredi-C₆-C₂₅-alkylester.

Bei den (Alkyl-)Arylsulfonaten der Alkalimetalle oder des Ammoniums sind vor allem C₆-C₃₅-Arylsulfonate, insbesondere C₆-C₃₀-Arylsulfonate zu nennen, die wiederum gegenbenenfalls zusätzlich am aromatischen Ring mit einem oder mehreren C₁-C₃₀-Alkylresten, insbesondere mit C₁-C₂₅-Alkylresten substituiert werden können. Beispiele für besonders geeignete Arylsulfonate sind u.a. C₁₂-Arylsulfonate sowie Verbindungen der allgemeinen Formel I 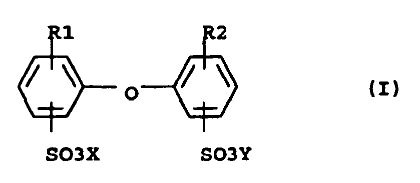 worin R¹ und R² Wasserstoff oder C₄-C₂₄-Alkyl bedeuten und nicht gleichzeitig Wasserstoff sind, und X und Y Alkalimetallionen und/oder Ammoniumionen sein können. X und Y sind bevorzugt Natrium, Kalium oder Ammonium, wobei Natrium besonders bevorzugt ist. Häufig werden technische Gemische verwendet, die einen Anteil von 50 bis 90 Gew.-% des monoalkylierten Produktes aufweisen, beispielsweise Dowfax® 2A1 (Dow Chemical Company). Die Verbindungen I sind allgemein bekannt, z.B. aus der US-A 4,269,749.

Gut geeignete Beispiele für Carboxylate der Alkalimetalle oder des Ammoniums sind u.a. C₆-C₃₀-Carboxylate, insbesondere C₁₂-C₂₅-Carboxylate wie zum Beispiel die entsprechenden Salze der Laurinsäure oder der Stearinsäure.

Die als Emulgatoren zu verwendenden Alkyl- oder Arylsulfonate oder Carboxylate von Alkalimetallen sind dem Fachmann allgemein bekannt und sind im Handel erhältlich. Sie werden üblicherweise während der Herstellung der Emulsionspolymerisate entweder gemeinsam mit den zu verwendenden Monomeren, in der Vorlage oder aber getrennt von den Monomeren in die wässrige Lösung gegeben.

Die Polymerisationstemperatur liegt im allgemeinen zwischen 0 - 100, vorzugsweise beträgt sie 0 - 95°C und besonders bevorzugt 3 - 90°C. Die Polymerisation kann jedoch auch bei Temperaturen oberhalb von 100°C durchgeführt werden, jedoch sind dann Drücke von mehr als 1 bar erforderlich, z.B. Drücke bis zu 40, vorzugsweise 1,5 bis 20 bar. Die Polymerisation kann jedoch auch unter vermindertem Druck vorgenommen werden, z.B. bei Drücken von 100 bis 900 mbar. In allen Fällen empfiehlt es sich, unter einer Stickstoffatmosphäre zu arbeiten.

Außerdem können noch Molgewichtsregler zugesetzt werden. Als Molgewichtsregler kommen z.B. aliphatische und aromatische Mercaptane wie Thiophenol oder t-Dodecylmercaptan, aber auch Thioester in Betracht.

Vorzugsweise wendet man eine diskontinuierliche Fahrweise an, aber es ist auch möglich, bei kontinuierlicher Fahrweise in einer Rührkesselkaskade zu arbeiten. Die hier angegebenen allgemeinen Verfahrensmerkmale für die Emulsionspolymerisation gelten entsprechend auch für die folgenden Stufen B, C und D.

### Stufe B:

In Gegenwart der Polymerisationsemulsion der Stufe A werden nun in der Stufe B weitere Monomere in Form eines Monomerengemisches aus den Monomeren IIIa, II und IV aufgepfropft.

Als Monomere IIIa eignen sich Acrylsäureester, insbesondere C₁-C₁₂-Alkylester der Acrylsäure, beispielsweise n-Butylacrylat, 2-Ethylhexylacrylat, sowie die Ester der C₂-C₈-Mono- oder Polyglykolmonoethem wie Ethylglykolacrylat oder Methyldiethylglykolacrylat. Die Menge an Acrylsäureestern wird dabei so bemessen, dass sie 80 bis 99,99 Gew.-%, vorzugsweise 90 bis 99,5 Gew.-% der Gesamtmenge der in der Stufe B eingesetzten Monomere beträgt.

Als Monomere II kommen die gleichen Monomere in Betracht, die bereits in der Stufe A unter der Bezeichnung Monomere II aufgeführt wurden, also aliphatische, konjugierte Diene wie u.a. Isopren, Chloropren oder Butadien. Die Menge an Monomeren II in der Stufe B beträgt 0 bis 5 Gew.-%, vorzugsweise 0 bis 3 Gew.-%, bezogen auf die Gesamtmenge der in Stufe B eingesetzten Monomere.

Weiterhin werden in der Stufe B 0,01 bis 10 Gew.-%, insbesondere 0,1 bis 5 Gew.-% Monomere IV, bezogen auf die Gesamtmenge der in Stufe B eingesetzten Monomere, copolymerisiert. Geeignete Monomere IV sind die gleichen Monomere, wie sie bereits unter der Bezeichnung Monomere IV in der Stufe A erwähnt wurden, also im wesentlichen bi- oder polyfunktionielle, nicht konjugierte Monomere wie zum Beispiel Acryl- oder Methacrylsäureester mehrwertiger Alkohole oder Acryl- oder Methacrylsäureester ungesättigter Alkohole. Besonders bevorzugte Monomere IV sind u.a. Butandioldiacrylat, Trimethylolpropantriacrylat oder Allylmethacrylat.

Im übrigen kann die Polymerisation der Stufe B unter den gleichen Bedingungen wie in der Stufe A geschildert durchgeführt werden.

Die Gesamtmenge der eingesetzten Monomere IIIa, II und IV in der Stufe B addiert sich dabei auf 100 %.

Im Anschluß daran erfolgt dann in Gegenwart der Polymerisatemulsionen der Stufen A und B in der Stufe C das Aufpfropfen weiterer Monomerer I, IV, und von I und IV verschiedenen Monomeren.

### Stufe C:

In der Stufe C werden 51 bis 98,99 Gew.-%, insbesondere 70 bis 95 Gew-.% Monomere I, bezogen auf die Gesamtmenge der Monomeren von Stufe C, copolymerisiert. Dabei handelt es sich um die gleichen Monomere I, die bereits als Monomere I in der Stufe A beschrieben wurden, also um Styrol, Vinyltoluol, α- und β-Methylstyrol, α-Butylstyrol, 4n-Butylstyrol sowie 4n-Decylstyrol. Besonders bevorzugt ist dabei Styrol.

Weiterhin werden in der Stufe C 0,01 bis 10 Gew-.%, insbesondere 0,03 bis 3 Gew.-%, bezogen auf die Gesamtmenge an Monomeren der Stufe C, eines Monomeren IV hinzupolymerisiert. Dabei handelt es sich um die gleichen Monomere IV wie in Stufe A aufgezählt, d.h. im wesentlichen um nicht konjugierte, bi- oder polyfunktionelle Monomere IV, beispielsweise um Acryl- oder Methacrylsäureester mehrwertiger Alkohole wie 1,4-Butandioldiacrylat, um Polyvinylether mehrwertiger Alkohole wie Butandioldivinylether oder um Acryl- oder Methacrylsäureester ungesättigter Alkohole wie zum Beispiel Allylacrylat oder Allylmethacrylat.

Darüber hinaus werden in der Stufe C auch noch 1 bis 48,99 Gew.-%, insbesondere 3 bis 30 Gew.-% Monomere III, bezogen auf die Gesamtmenge der Monomeren von Stufe C, einpolymerisiert. Geeignete Monomere III sind die gleichen Monomere wie in Stufe A beschrieben, also im wesentlichen i-Butylacrylat, n-Butylacrylat, Methylacrylat, Methylmethacrylat oder Ethylmethacrylat sowie 2-Ethylhexylacrylat. Vorzugsweise setzt man in Stufe C Methylmethacrylat ein.

Neben diesen Monomeren können in der Stufe C noch 0 bis 5 Gew.-%, insbesondere 0 bis 3 Gew.-%, bezogen auf die Gesamtmenge der Monomeren von Stufe C, weitere radikalisch polymerisierbare Monomere, die von den Monomeren I, III und IV verschieden sind, hinzupolymerisiert werden. Beispiele für solche Monomere sind u.a. Acrylsäure, Methacrylsäure, Vinylacetat, Vinylchlorid, Acrylnitril und Methacrylnitril.

Die Polymerisation der Stufe C kann unter den gleichen Bedingungen wie in der Stufe A geschildert, durchgeführt werden.

Die Gesamtmenge der in Stufe C eingesetzten Monomere I, III, IV und davon verschiedene Monomere, die radikalisch polymerisierbar sind, addiert sich dabei auf 100 Gew-.%. Ebenso addieren sich die Monomergemische A, B und C ebenfalls auf 100 Gew.-%.

### Stufe D:

In der Stufe D werden 80 bis 100 Gew.-%, vorzugsweise 90 bis 100 Gew.-% Monomere III, bezogen auf die Gesamtmenge der Monomeren von Stufe D, auf die Polymerisate, die in den vorangegangenen Polymerisationsstufen A, B und C erhaltenen wurden, gepfropft. Dabei handelt es sich um die gleichen Monomere, die bereits als Monomere III in der Stufe A beschrieben wurden. Die Monomeren III können gegebenenfalls mit bis zu 20 Gew.-%, bezogen auf die Mischung, mit mindestens einem anderen monoethylenisch ungesättigten Monomeren eingesetzt werden. Solche Monomere sind beispielsweise. Monomere aus der Gruppe I.

Vorzugsweise setzt man in Stufe D Methylmethacrylat als Monomer III ein.

Gegenstand der Erfindung ist außerdem ein Verfahren zur Herstellung der Emulsionscopolymerisate, wobei man die Polymerisationsstufen A - D nacheinander folgendermaßen ausgeführt,
A. Emulsionspolymerisation von 10 bis 50 Gew.-% eines Monomerengemischs A, das sich mit den Monomerengemischen B, C und D zu insgesamt 100 Gew.-% addiert, aus
   a₁₎ 50 bis 99,99 Gew.-% Styrol oder dessen kernsubstituierten Derivaten (Monomere I)
   a₂₎ 0 bis 5 Gew.-% eines aliphatischen konjugierten Diens mit bis zu 6 C-Atomen (Monomere II)
   a₃₎ 0 bis 49,99 Gew.-% eines C₁-C₁₂-Alkylesters der Acrylsäure oder der Methacrylsäure (Monomere III)
   a₄₎ 0,01 bis 10 Gew.-% eines bi- oder polyfunktionellen nicht konjugierten Monomeren (Monomere IV)
   a₅₎ 0 bis 5 Gew.-% weiterer radikalisch polymerisierbarer Monomere (Monomere V)
   wobei sich die Gew.-% a₁₎ - a₅₎ auf die Gesamtmenge der in Stufe A eingesetzten Monomere beziehen und sich zu insgesamt 100 Gew.-% addieren,
B. daran anschließende Pfropfpolymerisation von 20 bis 80 Gew.-% eines Monomerengemisches B, das sich mit den Monomerengemischen A, C und D zu insgesamt 100 Gew.-% addiert, aus
   b₁₎ 80 bis 99,99 Gew.-% eines Acrylsäureesters (Monomere IIIa)
   b₂₎ 0 bis 5 Gew.-% eines Monomeren II
   b₃₎ 0,01 bis 10 Gew.-% eines Monomeren IV
   wobei sich die Gew.-% b₁₎ - b₃₎ auf die Gesamtmenge der in Stufe B eingesetzten Monomere beziehen und sich zu insgesamt 100 Gew.-% addieren,
C. eine weitere daran anschließende Pfropfpolymerisation von 5 bis 50 Gew.-% eines Monomerengemisches C, das sich mit den Monomerengemischen A, B und D zu insgesamt 100 Gew.-% addiert, aus
   c₁₎ 51 bis 98,99 Gew.-% eines Monomeren I
   c₂₎ 0,01 bis 10 Gew.-% eines Monomeren IV
   c₃₎ 1 bis 48,99 Gew.-% eines Monomeren III
   c₄₎ 0 bis 5 Gew.-% weiterer radikalisch polymerisierbarer Monomere, die von den Monomeren I, II und IV verschieden sind,
   wobei sich die Gew.-% c₁₎ - c₄₎ auf die Gesamtmenge der in Stufe C eingesetzten Monomere beziehen und sich zu insgesamt 100 Gew.-% addieren und
D. eine weitere daran anschließende Pfropfpolymerisation von 5 bis 30 Gew.-% eines Monomerengemisches D, das sich mit den Monomerengemischen A, B und C zu insgesamt 100 Gew.-% addiert, aus
   d₁₎ 80 bis 100 Gew.-% mindestens eines Monomeren III
   d₂₎ 0 bis 20 Gew.-% mindestens eines anderen monoethylenisch ungesättigten Monomeren,
   d₃₎ 0 bis 10 Gew.-% eines Monomeren I
   d₄₎ 0 bis 5 Gew.-% eines Monomeren IV
   wobei sich die Gew.-% d₁₎ bis d₄₎ auf die Gesamtmenge der in Stufe D eingesetzten Monomere beziehen und sich zu insgesamt 100 Gew.-% addieren,
   und wobei die Herstellung der Emulsionscopolymerisate in Gegenwart von mehr als 0,10 Gew.-%, bezogen auf die insgesamt in den Stufen A bis D eingesetzten Monomeren, mindestens eines Neutralisierungsmittels durchgeführt wird.

Die Emulsionspolymerisation wird nach dem erfindungsgemäßen Verfahren vorzugsweise in den einzelnen Stufen A, B, C und D bei Temperaturen von 0 bis 100°C, insbesondere von 0 bis 95°C und besonders bevorzugt 3 - 90°C in der wässrigen Lösung durchgeführt. Meistens polymerisiert man die Monomeren in dem Temperaturbereich von 40 - 80°C.

Dabei empfiehlt es sich, die eingesetzten Monomere stufenweise und gegebenenfalls mit dem zu verwendenden Emulgator sowie geeigneten Initiatoren in die wässrige Lösung einzubringen.

Geeignete Initiatoren sind insbesondere radikalische Initiatoren wie organische oder anorganische Peroxide, beispielsweise Natriumperoxodisulfat, Kaliumperoxodisulfat, Ammoniumperoxodisulfat oder tert.Butylhydroperoxid, Wasserstoffperoxid oder organische Azoverbindungen. Darüber hinaus können auch sogenannte Reduktions-Oxidations (Red-Ox)-Initiator-Systeme als Initiatoren eingesetzt werden. Diese bestehen aus mindestens einem meist anorganischen Reduktionsmittel und einem anorganischen oder organischen Oxidationsmittel. Die Initiatoren werden vorzugsweise in einer Menge von 0,1 bis 5, besonders bevorzugt in einer Menge von 0,2 bis 3 mol-%, bezogen auf die eingesetzten Monomere verwendet.

Zur Steuerung der Molmassen der Emulsionspolymerisate können in den einzelnen Stufen A, B, C und D auch geeignete Regler wie zum Beispiel Mercaptane mitverwendet werden.

Die erfindungsgemäß in einer Menge von mehr als 0,10 bis 1,0 Gew.-%, bezogen auf die insgesamt verwendeten Monomeren, einzusetzenden Neutralisierungsmittel werden beispielsweise zusammen mit mindestens einem Emulgator in der Vorlage gelöst. Man kann das Neutralisierungsmittel jedoch auch nur zum Teil (z.B. 30 bis 80%) zur Vorlage geben und das restliche Neutralisierungsmittel in mindestens einer Polymerisationsstufe zufügen. Eine weitere Möglichkeit besteht darin, dass man das Neutralisierungsmittel in der ersten Polymerisationsstufe zusammen mit den Monomeren zufügt Bevorzugt ist eine Arbeitsweise, bei der man einen Teil des Neutralisierungsmittels vorlegt und den Rest verteilt über alle Polymerisationsstufen dosiert. Man kann jedoch auch so verfahren, dass man das Neutralisierungsmittel zusammen mit den Monomeren oder getrennt davon in jeder Polymerisationsstufe zugibt. Eine weitere Anwendungsform besteht darin einen Teil (z.B. 30-80 %) zur Vorlage zu geben, einen weiteren Teil (z.B. 10-60 %) in eine der nachfolgenden Polymerisationsstufen und den Rest nach Beendigung der Polymerisation nach Stufe D zuzugeben oder einen Teil zur Vorlage und den anderen Teil nach Beendigung der Polymerisation nach Stufe D zuzugeben. Weiterhin kann das Neutralisierungsmittel erst am Ende der Polymerisation zugegeben werden.

Die Emulsionspolymerisation zur Herstellung der erfindungsgemäßen Emulsionscopolymerisate kann in den in der Technik üblichen Reaktoren durchgeführt werden, beispielsweise in kontinuierlich oder diskontinuierlich betriebenen Kesseln oder Mischern. Bevorzugte Reaktoren sind dabei Rührkessel.

Das erfindungsgemäße Verfahren kann auch in der Weise abgewandelt werden, dass zuerst die Emulsionspolymerisation der Stufe B und anschließend die Emulsionspolymerisation der Stufe A durchgeführt wird. Auf diese Weise bildet die Stufe B den Kern des Emulsionscopolymerisats. Falls die Reihenfolge nicht abgewandelt wird, besteht der Kern des erfindungsgemäßen Emulsionscopolymerisats aus den Monomeren der Stufe A, die inneren Schalen aus den Monomeren der Stufen B und C und die äußere Schale aus den Monomeren der Stufe D.

Weiterhin kann es sich empfehlen, vor der Zugabe der Monomere der einzelnen Stufen zunächst eine Vorlage aus Wasser und gegebenenfalls einer Saat bereitzustellen und danach schrittweise die Monomere der einzelnen Stufen zulaufen zu lassen. Bei der Saat handelt es sich dabei üblicherweise um ein Emulsionspolymerisat, das in Gegenwart eines Emulgators hergestellt wird und in seiner Zusammensetzung dem Emulsionscopolymerisat der Stufe A entspricht oder diesem zumindest ähnelt. Die Saat kann auch dadurch erhalten werden, dass man zu einer Vorlage aus Wasser, Emulgator und gegebenenfalls Neutralisierungsmittel Monomere, die in mindestens einer Polymerisationsstufe A - D der Emulsionspolymerisation unterworfen werden, dosiert und in Gegenwart mindestens eines Initiators nach Art einer Emulsionspolymerisation polymerisiert. Die Teilchengrößen des als Saat verwendeten Emulsionspolymerisats betragen beispielsweise 25 bis 40 nm.

Die erfindungsgemäßen Emulsionspolymerisate weisen üblicherweise eine mittlere Teilchengröße (d 50) von 50 bis 300nm, insbesondere von 70 bis 200nm und besonders bevorzugt von 70 bis 150nm auf. Ihr Gelgehalt liegt vorzugsweise im Bereich von 0 bis 100 %, insbesondere im Bereich von 90 bis 95 %. Durch die Teilchengröße werden sowohl die optischen Eigenschaften wie Transparenz und Opaleszenz als auch die mechanischen Eigenschaften, insbesondere die Schlagzähigkeit, der erfindungsgemäßen Emulsionscopolymerisate deutlich beeinflußt.

Die erfindungsgemäßen Emulsionscopolymerisate weisen vorzugsweise mindestens zwei Glasübergangstemperaturen T_{g} auf, wobei eine T_{g1} unterhalb von 0°C und die andere T_{g2} bei mehr als 50°C liegt.

Unter der Glasübergangstemperatur T_{g} wird hier die gemäß ASTM D 3418-82 durch Differentialthermonanalyse (DSC) ermittelte "midpoint temperature" verstanden (vgl. Ullmann's Encyclopedia of Industrial Chemistry, 5th Edition, Volume A 21, VCH Weinheim 1992, S. 169 sowie Zosel, Farbe und Lack 82 (1976), S. 125-134, siehe auch DIN 53765).

Die Glasübergangstemperatur der erfindungsgemäßen Emulsionscopolymerisate kann auch über die jeweiligen Glasübergangstemperaturen der enthaltenden Monomere abgeschätzt werden (T.G. Fox, Bull. Am. Phys. Soc. (Ser. II) 1, 123 [1956] und Ullmanns Enzyklopädie der technischen Chemie, Weinheim (1980), S. 17-18).

Die erhaltenen erfindungsgemäßen Emulsionscopolymerisate können aus der wässrigen Dispersion mit Hilfe üblicher Verfahren, beispielsweise durch Koagulation, Trocknung oder Sprühtrocknung isoliert und mit Thermoplasten und gegebenenfalls weiteren Zusatzstoffen wie Stabilisatoren, Gleitmitteln, Füllstoffen, Farbstoffen, Pigmenten oder weiteren Modifizierungsmitteln zur Verbesserung der Transparenz, Witterungsbeständigkeit, Wärmeformbeständigkeit, Schlagzähigkeit etc. nach bekannten Verfahren gemischt werden. Die Verarbeitung der so erhaltenen Formmassen erfolgt nach für Thermoplaste üblichen Methoden (Extrudieren, Spritzgießen, Kalandrieren, Pressen, Tiefziehen u.a.).

Die erfindungsgemäßen Emulsionscopolymerisate können als Zuschlagsstoffe für thermoplastische Polymerisate zur Verbesserung ihrer Schlagzähigkeit verwendet werden. Sie eignen sich insbesondere als Zuschlagsstoffe für Harzmassen aus Polyvinylhalogeniden, insbesondere aus Polyvinylchlorid (PVC). Die daraus erhaltenen thermoplastischen Formmassen weisen neben den erfindungsgemäßen Emulsionscopolymerisaten, die in Mengen von 1 bis 40 Gew.-%, insbesondere von 2 bis 30 Gew.-%, bezogen auf die gesamte Formmasse vorliegen können, vor allem noch übliche Stabilisatoren, Verarbeitungshilfsmittel oder Farbstoffe auf.

Die ebenfalls erfindungsgemäßen thermoplastischen Formmassen weisen neben einer hohen Transparenz und Witterungsbeständigkeit, sowie einer guten Schlagzähigkeit und guten optischen Eigenschaften (keine Opaleszenz und praktisch kein Blaustich (negativer b*-Wert vor schwarzem Hintergrund)) insbesondere eine hohe thermische Stabilität auf. Der b*-Wert wird vor schwarzem Hintergrund (Standard Kachel-Satz, Fa. Dr. Lange, in Anlehnung an DIN 6167 mit Hilfe des Farbmessgerätes Luci 100 der Fa. Dr. Lange) bestimmt (Lichtart: D 65, Normalbeobachter 10°).

Die Prozentangaben in den Beispielen bedeuten Gewichtsprozent.

### Beispiele 1 bis 11

### I. Herstellung der erfindungsgemäßen Emulsionscopolymerisate 1 bis 9

Die nachfolgenden erfindungsgemäßen Emulsionscopolymerisate 1 bis 9 wurden alle ausgehend von einer Vorlage durch Emulsionspolymerisation hergestellt.

Um die Emulsionscopolymerisate 1 - 2, 6 und 7 herzustellen, polymerisierte man zunächst die in die Vorlage dosierten Monomeren nach Art einer Emulsionspolymerisation bei einer Temperatur von 80°C. Als Starter verwendete man Natriumpersulfat. Man erhielt auf diese Weise eine Vorlage, die ein Polymerisat mit einer mittleren Teilchengröße von 30 nm enthielt.

Zur Herstellung der Emulsionscopolymerisate 3 - 5, 8 und 9 legte man eine Saat vor, die durch Emulsionspolymerisation von Styrol in Gegenwart von 20% Emulgator 1 a, bezogen auf das Reaktionsgemisch, hergestellt worden war und einen Polymergehalt von 30% und eine mittlere Teilchengröße von 30 nm hatte.
Emulgator 1a: 45%ige wässrige Lösung des Natriumsalzes von p-C₁₂-Alkyl-Phenylsulfonat
Emulgator 1: 45%ige wässrige Lösung des Natriumsalzes einer Mischung aus Mono- und Didodecyl-substituiertem disulfoniertem Diphenyloxid
Emulgator 2: 45%ige wässrige Lösung des Natriumsalzes von p-Decylphenylsulfonat
Initiatorlösung 1: wässrige Natriumpersulfatlösung (= Zulauf 5, vgl. unten)

Die Vorlage wurde in einen 21 Kolben gefüllt, der mit Rückflusskühler, Stickstoffeinleitung und Metallrührer ausgerüstet war, und unter Stickstoffspülung auf 80°C aufgeheizt. 25 % der Initiatorlösung 1 und 10% von Zulauf 1 wurde innerhalb von 2 min hinzugegeben. Nach 5 min folgte die kontinuierliche Zugabe der Monomeremulsion (Zulauf 1) innerhalb von 2 Stunden. Gleichzeitig wurde die restliche Initiatorlösung (Zulauf 5) innerhalb von 4,75 Stunden hinzugegeben. Nach Beendigung von Zulauf 1 wurde 0,5 Stunde nachpolymerisiert. Im Anschluss daran wurde Zulauf 2 innerhalb von 1 Stunde und Zulauf 3 sowie Zulauf 4 nach einer Zulaufpause von 0,75 Stunde innerhalb von 0,5 Stunde zudosiert. Nach Zulaufende wurde 0,5 Stunde nachpolymerisiert und anschließend abgekühlt. Man erhielt Emulsionscopolymerisate mit einem mittleren Teilchendurchmesser von 85 nm.

Die einzelnen Zuläufe, die für die Herstellung der erfindungsgemäßen Emulsionscopolymerisate 1 bis 9 verwendet wurden, hatten folgende Zusammensetzung:
Emulsionscopolymerisat 1

| | |
|---|---|
| Vorlage | 200 g Wasser |
| | 9,00 g Emulgator 1 |
| | 2,60 g NaHCO₃ |
| | 28 g Zulauf 1 |
| | 6,0 g Zulauf 5 |
| | |
| Zulauf 1 | 165 g Wasser |
| | 7,3 g Emulgator 1 |
| | 105,0 g Styrol |
| | 2,2 g Allylmethacrylat |
| | |
| Zulauf 2 | 171,0 g Wasser |
| | 4,9 g Emulgator 1 |
| | 187,2 g n-Butylacrylat |
| | 1,7 g Allylmethacrylat |
| | |
| Zulauf 3 | 133 g Wasser |
| | 1,2 g Emulgator 1 |
| | 120,0 g Styrol |
| | 0,5 g Allylmethacrylat |
| | 21,6 g Methylmethacrylat |
| | |
| Zulauf 4 | 104,0 g Methylmethacrylat |
| | |
| Zulauf 5 | 1,0 g Natriumperoxodisulfat |
| | 13,8 g Wasser |

Emulsionscopolymerisat 2

| | |
|---|---|
| Vorlage | 200 g Wasser |
| | 9,00 g Emulgator 1 |
| | 1,50 g NaHCO₃ |
| | 28 g Zulauf 1 |
| | 6,0 g Zulauf 5 |
| | |
| Zulauf 1 | 165 g Wasser |
| | 7,3 g Emulgator 1 |
| | 105,0 g Styrol |
| | 2,2 g Allylmethacrylat |
| | 0,50 g NaHCO₃ |
| | |
| Zulauf 2 | 171,0 g Wasser |
| | 4,9 g Emulgator 1 |
| | 187,2 g n-Butylacrylat |
| | 1,7 g Allylmethacrylat |
| | |
| Zulauf 3 | 133 g Wasser |
| | 1,2 g Emulgator 1 |
| | 120,0 g Styrol |
| | 0,5 g Allylmethacrylat |
| | 21,6 g Methylmethacrylat |
| | 0,60 g NaHCO₃ |
| | |
| Zulauf 4 | 104,0 g Methylmethacrylat |
| | |
| Zulauf 5 | 1,0 g Natriumperoxodisulfat |
| | 13,8 g Wasser |

Emulsionscopolymerisat 3

| | |
|---|---|
| Vorlage | 200 g Wasser |
| | 9,80 g Emulgator 2 |
| | 3,50 g NaHCO₃ |
| | 88,0 g Saat |
| | 6,0 g Zulauf 5 |
| | |
| Zulauf 1 | 165 g Wasser |
| | 7,3 g Emulgator 2 |
| | 120,0 g Styrol |
| | 2,0 g Allylmethacrylat |
| | |
| Zulauf 2 | 171,0 g Wasser |
| | 4,9 g Emulgator 2 |
| | 187,2 g n-Butylacrylat |
| | 1,9 g Allylmethacrylat |
| | |
| Zulauf 3 | 133 g Wasser |
| | 1,2 g Emulgator 2 |
| | 105,0 g Styrol |
| | 0,5 g Allylmethacrylat |
| | 21,6 g Methylmethacrylat |
| | |
| Zulauf 4 | 104,0 g Methylmethacrylat |
| | |
| Zulauf 5 | 1,5 g Natriumperoxodisulfat |
| | 13,8 g Wasser |

Emulsionscopolymerisat 4

| | |
|---|---|
| Vorlage | 200 g Wasser |
| | 9,00 g Emulgator 1 |
| | 1,3 g NaHCO₃ |
| | 88,0 g Saat |
| | 6,0 g Zulauf 5 |
| | |
| Zulauf 1 | 165 g Wasser |
| | 7,3 g Emulgator 1 |
| | 105,0 g Styrol |
| | 2,2 g Butandioldiacrylat |
| | |
| Zulauf 2 | 171,0 g Wasser |
| | 4,9 g Emulgator 2 |
| | 187,2 g n-Butylacrylat |
| | 1,7 g Allylmethacrylat |
| | |
| Zulauf 3 | 133 g Wasser |
| | 1,2 g Emulgator 2 |
| | 120,0 g Styrol |
| | 0,5 g Allylmethacrylat |
| | 45,6 g Methylmethacrylat |
| | 0,3 g NaHCO₃ |
| | |
| Zulauf 4 | 80,0 g Methylmethacrylat |
| | |
| Zulauf 5 | 1,0 g Natriumperoxodisulfat |
| | 13,8 g Wasser |

Emulsionscopolymerisat 5

| | |
|---|---|
| Vorlage | 200 g Wasser |
| | 9,00 g Emulgator 1 |
| | 1,00 g NaHCO₃ |
| | 88,0 g Saat |
| | 6,0 g Zulauf 5 |
| | |
| Zulauf 1 | 165 g Wasser |
| | 7,3 g Emulgator 1 |
| | 105,0 g Styrol |
| | 2,2 g Allylmethacrylat |
| | 0,50 g NaHCO₃ |
| | |
| Zulauf 2 | 171,0 g Wasser |
| | 4,9 g Emulgator 1 |
| | 187,2 g n-Butylacrylat |
| | 0,5 g Allylmethacrylat |
| | 0,50 g NaHCO3 |
| | |
| Zulauf 3 | 133 g Wasser |
| | 1,2 g Emulgator 1 |
| | 120,0 g Styrol |
| | 1,7 g Allylmethacrylat |
| | 21,6 g Methylmethacrylat |
| | 0,50 g NaHCO₃ |
| | |
| Zulauf 4 | 104,0 g Methylmethacrylat |
| | |
| Zulauf 5 | 1,0 g Natriumperoxodisulfat |
| | 13,8 g Wasser |

Emulsionscopolymerisat 6

| | |
|---|---|
| Vorlage | 200 g Wasser |
| | 9,00 g Emulgator 1 |
| | 0,50 g NaHCO3 |
| | 28 g Zulauf 1 |
| | 6,0 g Zulauf 5 |
| | |
| Zulauf 1 | 165 g Wasser |
| | 7,3 g Emulgator 1 |
| | 100,0 g Styrol |
| | 2,2 g Allylmethacrylat |
| | |
| Zulauf 2 | 171,0 g Wasser |
| | 4,9 g Emulgator 1 |
| | 187,2 g n-Butylacrylat |
| | 1,7 g Allylmethacrylat |
| | |
| Zulauf 3 | 133 g Wasser |
| | 1,2 g Emulgator 1 |
| | 125,0 g Styrol |
| | 0,5 g Allylmethacrylat |
| | 10,6 g Methylmethacrylat |
| | |
| Zulauf 4 | 115,0 g Methylmethacrylat |
| | |
| Zulauf 5 | 1,0 g Natriumperoxodisulfat |
| | 13,8 g Wasser |
| | |
| Zulauf 6 | 0,5 g NH₃ (20% ige wässrige Lösung) |

Emulsionscopolymerisat 7

| | |
|---|---|
| Vorlage | 200 g Wasser |
| | 9,00 g Emulgator 1 |
| | 28 g Zulauf 1 |
| | 6,0 g Zulauf 5 |
| | |
| Zulauf 1 | 165 g Wasser |
| | 7,3 g Emulgator 1 |
| | 105,0 g Styrol |
| | 2,2 g Allylmethacrylat |
| | |
| Zulauf 2 | 171,0 g Wasser |
| | 4,9 g Emulgator 1 |
| | 187,2 g n-Butylacrylat |
| | 1,7 g Allylmethacrylat |
| | 2,00 g NaHCO₃ |
| | |
| Zulauf 3 | 133 g Wasser |
| | 1,2 g Emulgator 1 |
| | 120,0 g Styrol |
| | 0,5 g Allylmethacrylat |
| | 21,6 g Methylmethacrylat |
| | 0,60 g NaHCO₃ |
| | |
| Zulauf 4 | 104,0 g Methylmethacrylat |
| | |
| Zulauf 5 | 1,0 g Natriumperoxodisulfat |
| | 13,8 g Wasser |

Emulsionscopolymerisat 8

| | |
|---|---|
| Vorlage | 180 g Wasser |
| | 9,00 g Emulgator 1 |
| | 88,0 g Saat |
| | 6,0 g Zulauf 5 |
| | |
| Zulauf 1 | 165 g Wasser |
| | 7,3 g Emulgator 1 |
| | 115,0 g Styrol |
| | 2,2 g Allylmethacrylat |
| | |
| Zulauf 2 | 171,0 g Wasser |
| | 4,9 g Emulgator 1 |
| | 200,0 g n-Butylacrylat |
| | 1,7 g Allylmethacrylat |
| | |
| Zulauf 3 | 133 g Wasser |
| | 1,2 g Emulgator 1 |
| | 120,0 g Styrol |
| | 0,5 g Allylmethacrylat |
| | 25,6 g Methylmethacrylat |
| | |
| Zulauf 4 | 100,0 g Methylmethacrylat |
| | |
| Zulauf 5 | 1,9 g Natriumperoxodisulfat |
| | 13,8 g Wasser |
| | |
| Zulauf 6 | 2,3 g NaHCO₃ |
| | 20 g H₂O |

Emulsionscopolymerisat 9

| | |
|---|---|
| Vorlage | 200 g Wasser |
| | 6,50 g Emulgator 1 |
| | 2,00 g NaHCO₃ |
| | 100,0 g Saat |
| | 6,0 g Zulauf 5 |
| | |
| Zulauf 1 | 165 g Wasser |
| | 7,3 g Emulgator 1 |
| | 100,0 g Styrol |
| | 2,0 g Allylmethacrylat |
| | |
| Zulauf 2 | 171,0 g Wasser |
| | 4,9 g Emulgator 1 |
| | 187,2 g n-Butylacrylat |
| | 1,9 g Allylmethacrylat |
| | |
| Zulauf 3 | 133 g Wasser |
| | 1,2 g Emulgator 1 |
| | 120,0 g Styrol |
| | 0,1 g Allylmethacrylat |
| | 21,6 g Methylmethacrylat |
| | |
| Zulauf 4 | 104,0 g Methylmethacrylat |
| | 0,05 g Allylmethacrylat |
| | |
| Zulauf 5 | 1,5 g Natriumperoxodisulfat |
| | 20,6 g Wasser |

### PVC-Formmassen

Die Herstellung einer PVC-Formmasse, die vorgenanntes aus der Dispersion erzeugte Polymerisatpulver (Fällung, Sprühtrocknung nach allgemein bekannten Methoden) als Schlagzähmodifier enthielt, erfolgte wie nachfolgend beschrieben:

### Beispiel 10

90 Gew.-Teile PVC (Solvin® 257 RF, Firma Solvin), 0,3 Gew.-Teile Gleitmittel (Loxiol® G72, Firma Cognis), 0,8 Gew.-Teile Gleitmittel (Loxiol® G16, Firma Cognis), 1,1 Gew.-Teile Zinn-Stabilisator (Irgastab®17 MOK, Firma Ciba) und 25 Gew.-Teile des Polymerisatpulvers aus Emulsionscopolymerisat 1 wurden in einem Mischer der Firma MTI Mischtechnik Industrieanlagen GmbH, Typ LM 5 FU, gemischt. Innerhalb von 10 Minuten wurde die Mischtemperatur auf 130 °C erhöht und anschließend innerhalb von 10 Minuten wieder auf Raumtemperatur abgekühlt. Zur Erstellung des Walzfelles wurde der so erhaltene Dryblend auf ein Doppelwalzwerk der Firma Collin GmbH (Typ 110P) gegeben und 8 Minuten bei 170 °C gewalzt. Das so erhaltene Walzfell wurde zugeschnitten, in Pressformen gelegt und 8 Minuten bei einer Temperatur von 180 °C und bei einem Druck von 15 bar in einer Laborplattenpresse der Firma Collin GmbH, Typ 200 P, gepresst. Anschließend wurde der Druck bei vorgenannter Temperatur auf 200 bar erhöht, die Pressplatten 5 Minuten bei diesen Bedingungen belassen und dann unter einem Druck von 200 bar wieder auf Raumtemperatur abgekühlt. Die resultierenden Pressplatten hatten eine Dicke von 3 mm. Die Prüfergebnisse sind in Tabelle 2 angegeben.

Vergleichsbeispiel 1 gemäß EP-A-1 388 549

Das Emulsionscopolymerisat 1 der EP-A-1 388 549 wurde hergestellt, indem man in einem 2 l fassenden Kolben, der mit Rührer, Rückflusskühler und Stickstoffeinleitung ausgestattet war, die in Tabelle 1 angegebene Vorlage unter Stickstoffspülung auf 80°C erhitzte. Dann dosierte man 25 % der Initiatorlösung innerhalb von 2 min und nach 5 Minuten kontinuierlich den in Tabelle 1 angegebenen Zulauf 1 innerhalb von 2 Stunden. Gleichzeitig wurde die restliche Initiatorlösung innerhalb von 4,75 Stunden zugegeben. Nach Beendigung von Zulauf 1 wurde das Reaktionsgemisch 0,5 Stunden nachpolymerisiert. Dann dosierte man Zulauf 2 innerhalb von 1 Stunde und Zulauf 3 sowie Zulauf 4 nach einer Zulaufpause von 0,75 Stunden innerhalb von 0,5 Stunden zu. Nach Zulaufende wurde das Gemisch noch 0,5 Stunden nachpolymerisiert und anschließend abgekühlt.

**Tabelle 1**

| | |
|---|---|
| Vorlage: | 200,00 g Wasser, 8,30 g Saat, 0,50 g Natriumhydrogencarbonat |
| | |
| Zulauf 1: | 250,00 g Wasser, 5,00 g Dowfax 2 A1¹⁾, 220,75 g Styrol, 1,25 Allyl-Methacrylat |
| | |
| Zulauf 2: | 150,00 g Wasser, 3,25 g Dowfax, 180,40 g n-Butylcrylat, 1,5 g Allyl-Methacrylat |
| | |
| Zulauf 3: | 100,00 g Wasser, 0,75 g Dowfax, 75,50 g Methylmethacrylat, 19,65 g Styrol |
| | |
| Zulauf 4: | 1,50 g Natriumperoxodisulfat, 25 g Wasser |

| | |
|---|---|
| ¹⁾ Mono- und Didodecyl disulfoniertes Diphenyloxid (Emulgator), Fa. The Dow Chemical Company | |

Man erhielt eine Polymerdispersion, aus der durch Sprühtrocknung ein Pulver hergestellt wurde. Das Polymerpulver wurde anschließend mit dem gleichen PVC unter den gleichen Bedingungen wie im Beispiel 10 beschrieben, gemischt und zu Pressplatten einer Dicke von 3 mm verarbeitet. Die Pressplatten wurden anschließend auf thermische Stabilität, Transparenz und Farbwerte geprüft. Die Prüfergebnisse sind in Tabelle 2 angegeben.

### Meßmethoden

### Thermische Stabilität

Um die thermische Stabilität der Polymermischung zu bestimmen, stellte man aus den Pressplatten zunächst Probestücke mit den Abmessungen 1 cm x 1,5 cm x 0,5 cm her und lagerte sie in einem Ofen bei einer Temperatur von 180°C. In Intervallen von jeweils 10 Minuten wurde dem Ofen ein Probestück entnommen und visuell beurteilt. Für die Beurteilung der getemperten Probestücke ist der Farbumschlag von gelb nach braun maßgeblich. Die dazugehörige Verweilzeit wird als thermische Stabilität definiert.

### Bestimmung der Transparenz

Die Trübung (nach ASTM D 1003) und die Gesamttransmission der 3 mm dicken Pressplatten wurde mit Hilfe eines Transparenzmessgerätes der Firma Gardner (Haze Gard Plus) bestimmt.

### Bestimmung der Farbwerte (Blaustich)

Die Farbwerte L*, a*, b* der 3 mm dicken Pressplatten wurden vor weißem und schwarzem Hintergrund (Standard Kachel-Satz, Fa. Dr. Lange) in Anlehnung an DIN 6167 mit Hilfe des Farbmessgerätes Luci 100 der Fa. Dr. Lange bestimmt (Lichtart: D 65, Normalbeobachter 10°).

**Tabelle 2**

| | Beispiel 10 | Vergleichsbeispiel 1 |
|---|---|---|
| Thermische Stabilität | 70 min | 40 min |
| Blaustich | +1,1 | -1,6 |
| Transparenz | 83 | 79 |

## Patentansprüche

1. Emulsionscopolymerisate, erhältlich durch
A. Emulsionspolymerisation von 10 bis 50 Gew.-% eines Monomerengemischs A, das sich mit den Monomerengemischen B, C und D zu insgesamt 100 Gew.-% addiert, aus
a₁₎ 50 bis 99,99 Gew.-% Styrol oder dessen kernsubstituierten Derivaten (Monomere I)
a₂₎ 0 bis 5 Gew.-% eines aliphatischen konjugierten Diens mit bis zu 6 C-Atomen (Monomere II)
a₃₎ 0 bis 49,99 Gew.-% eines C₁-C₁₂-Alkylesters der Acrylsäure oder der Methacrylsäure (Monomere III)
a₄₎ 0,01 bis 10 Gew.-% eines bi- oder polyfunktionellen nicht konjugierten Monomeren (Monomere IV)
a₅₎ 0 bis 5 Gew.-% weiterer radikalisch polymerisierbarer Monomere (Monomere V)
wobei sich die Gew.-% a₁₎ - a₅₎ auf die Gesamtmenge der in Stufe A eingesetzten Monomere beziehen und sich zu insgesamt 100 Gew.-% addieren,
B. daran anschließende Pfropfpolymerisation von 20 bis 80 Gew.-% eines Monomerengemisches B, das sich mit den Monomerengemischen A, C und D zu insgesamt 100 Gew.-% addiert, aus
b₁₎ 80 bis 99,99 Gew.-% eines C₁- bis C₁₂- Acrylsäureesters (Monomere IIIa)
b₂₎ 0 bis 5 Gew.-% eines Monomeren II
b₃₎ 0,01 bis 10 Gew.-% eines Monomeren IV,
wobei sich die Gew.-% b₁₎ - b₃₎ auf die Gesamtmenge der in Stufe B eingesetzten Monomere beziehen und sich zu insgesamt 100 Gew.-% addieren,
C. eine weitere daran anschließende Pfropfpolymerisation von 5 bis 50 Gew.-% eines Monomerengemisches C, das sich mit den Monomerengemischen A, B und D zu insgesamt 100 Gew.-% addiert, aus
c₁₎ 51 bis 98,99 Gew.-% eines Monomeren I
c₂₎ 0,01 bis 10 Gew.-% eines Monomeren IV
c₃₎ 1 bis 48,99 Gew.-% eines Monomeren III
c₄₎ 0 bis 5 Gew.-% weiteren radikalisch polymerisierbaren Monomeren, die von den Monomeren I, III und IV verschieden sind,
wobei sich die Gew.-% c₁₎ - c₄₎ auf die Gesamtmenge der in Stufe C eingesetzten Monomere beziehen und sich zu insgesamt 100 Gew.-% addieren, sowie
D. eine weitere daran anschließende Pfropfpolymerisation von 5 bis 30 Gew.-% eines Monomerengemisches D, das sich mit den Monomerengemischen A, B, und C zu insgesamt 100 Gew.-% addiert, aus
d₁₎ 80 bis 100 Gew.-% mindestens eines Monomeren III
d₂₎ 0 bis 20 Gew.-% mindestens eines anderen monoethylenisch ungesättigten Monomeren,
d₃₎ 0 bis 10 Gew.-% eines Monomeren I
d₄₎ 0 bis 5 Gew.-% eines Monomeren IV
wobei sich die Gew.-% d₁₎ bis d₄₎ auf die Gesamtmenge der in Stufe D eingesetzten Monomere beziehen und sich zu insgesamt 100 Gew.-% addieren und
wobei man die Emulsionspolymerisation in Gegenwart von mehr als 0,10 Gew.-%, bezogen auf die insgesamt in den Stufen A bis D eingesetzten Monomeren, mindestens eines Neutralisierungsmittels durchführt,
wobei die Emulsionspolymerisationen der Stufen A und B auch miteinander vertauscht werden können.

2. Emulsionscopolymerisate nach Anspruch 1, **dadurch gekennzeichnet, dass** man als Neutralisierungsmittel mindestens eine Verbindung aus der Gruppe Natronlauge, Kalilauge, Natriumcarbonat, Kaliumcarbonat, Natriumhydrogencarbonat, Kaliumhydrogencarbonat, Ammoniak, Ammoniumcarbonat, Ammoniumhydrogencarbonat und Amine einsetzt.

3. Emulsionscopolymerisate nach Anspruch 1 oder 2, **dadurch gekennzeichnet, dass** die Menge an Neutralisierungsmittel 0,11 bis 1,0 Gew.-%, bezogen auf die insgesamt in den Stufen A bis D eingesetzten Monomeren, beträgt.

4. Emulsionscopolymerisate nach einem der Ansprüche 1 bis 3, **dadurch gekennzeichnet, dass** die Menge an Emulgator höchstens 2,1 Gew.-%, bezogen auf die insgesamt in den Stufen A bis D eingesetzten Monomeren, beträgt.

5. Emulsionscopolymerisate nach einem der Ansprüche 1 bis 4, **dadurch gekennzeichnet, dass** die Menge an Emulgator höchstens 1,9 Gew.-%, bezogen auf die insgesamt in den Stufen A bis D eingesetzten Monomeren, beträgt.

6. Emulsionscopolymerisate nach einem der Ansprüche 1 bis 5, **dadurch gekennzeichnet, dass** man als Monomere I Styrol und als Monomere IV Allylmethacrylat einsetzt.

7. Emulsionscopolymerisate nach einem der Ansprüche 1 bis 6, **dadurch gekennzeichnet, dass** man als Acrylsäureester (Monomere III und IIIa) n-Butylacrylat einsetzt.

8. Verfahren zur Herstellung von Emulsionscopolymerisaten gemäß den Ansprüchen 1 bis 7, wobei man die Polymerisationsstufen A - D nacheinander ausführt,
A. Emulsionspolymerisation von 10 bis 50 Gew.-% eines Monomerengemischs A, das sich mit den Monomerengemischen B und C zu insgesamt 100 Gew.-% addiert, aus
a₁₎ 50 bis 99,99 Gew.-% Styrol oder dessen kernsubstituierten Derivaten (Monomere I)
a₂₎ 0 bis 5 Gew.-% eines aliphatischen konjugierten Diens mit bis zu 6 C-Atomen (Monomere II)
a₃₎ 0 bis 49,99 Gew.-% eines C₁-C₁₂-Alkylesters der Acrylsäure oder der Methacrylsäure (Monomere III)
a₄₎ 0,01 bis 10 Gew.-% eines bi- oder polyfunktionellen nicht konjugierten Monomeren (Monomere IV)
a₅₎ 0 bis 5 Gew.-% weiterer radikalisch polymerisierbarer Monomere (Monomere V)
wobei sich die Gew.-% a₁₎ - a₅₎ auf die Gesamtmenge der in Stufe A eingesetzten Monomere beziehen und sich zu insgesamt 100 Gew.-% addieren
B. daran anschließende Pfropfpolymerisation von 20 bis 80 Gew.-% eines Monomerengemisches B, das sich mit den Monomerengemischen A und C zu insgesamt 100 Gew.-% addiert, aus
b₁₎ 80 bis 99,99 Gew.-% eines Acrylsäureesters (Monomere IIIa)
b₂₎ 0 bis 5 Gew.-% eines Monomeren II
b₃₎ 0,01 bis 10 Gew.-% eines Monomeren IV
wobei sich die Gew.-% b₁₎ - b₃₎ auf die Gesamtmenge der in Stufe B eingesetzten Monomere beziehen und sich zu insgesamt 100 Gew.-% addieren,
C. eine weitere daran anschließende Pfropfpolymerisation von 5 bis 50 Gew.-% eines Monomerengemisches C, das sich mit den Monomerengemischen A, B und D zu insgesamt 100 Gew.-% addiert, aus
c₁₎ 51 bis 98,99 Gew.-% eines Monomeren I
c₂₎ 0,01 bis 10 Gew.-% eines Monomeren IV
c₃₎ 1 bis 48,99 Gew.-% eines Monomeren III
c₄₎ 0 bis 5 Gew.-% weiterer radikalisch polymerisierbarer Monomere, die von den Monomeren I, II und IV verschieden sind,
wobei sich die Gew.-% c₁₎ - c₄₎ auf die Gesamtmenge der in Stufe C eingesetzten Monomere beziehen und sich zu insgesamt 100 Gew.-% addieren und
D. eine weitere daran anschließende Pfropfpolymerisation von 5 bis 30 Gew.-% eines Monomerengemisches D, das sich mit den Monomerengemischen A, B und C zu insgesamt 100 Gew.-% addiert, aus
d₁₎ 80 bis 100 Gew.-% mindestens eines Monomeren III
d₂₎ 0 bis 20 Gew.-% mindestens eines anderen monoethylenisch ungesättigten Monomeren,
d₃₎ 0 bis 10 Gew.-% eines Monomeren I
d₄₎ 0 bis 5 Gew.-% eines Monomeren IV
wobei sich die Gew.-% d₁₎ bis d₄₎ auf die Gesamtmenge der in Stufe D eingesetzten Monomere beziehen und sich zu insgesamt 100 Gew.-% addieren,
und wobei die Herstellung der Emulsionscopolymerisate in Gegenwart von mehr als 0,10 Gew.-%, bezogen auf die insgesamt in den Stufen A bis D eingesetzten Monomeren, mindestens eines Neutralisierungsmittels durchgeführt wird.

9. Verfahren nach Anspruch 8, **dadurch gekennzeichnet, dass** man die Emulsionspolymerisation in den Schritten A, B, C und D bei Temperaturen von 3 bis 90°C ausführt.

10. Verfahren nach Anspruch 8, **dadurch gekennzeichnet, dass** man die Emulsionspolymerisation in den Schritten A, B, C und D bei Temperaturen von 40 bis 80°C ausführt.

11. Verwendung der Emulsionscopolymerisate gemäß den Ansprüchen 1 bis 7 als Zuschlagsstoffe im Polyvinylhalogenidharzmassen zur Verbesserung der Schlagzähigkeit.

12. Thermoplastische Formmassen aus Polyvinylhalogeniden, enthaltend 1 bis 40 Gew.-% der Emulsionscopolymerisate nach den Ansprüchen 1 bis 7.

## Claims

1. An emulsion copolymer obtainable via
A. emulsion polymerization of from 10 to 50% by weight of a monomer mixture A which, together with the monomer mixtures B, C, and D gives a total of 100% by weight, composed of
a₁₎ from 50 to 99.99% by weight of styrene or of its ring-substituted derivatives (monomers I)
a₂₎ from 0 to 5% by weight of an aliphatic conjugated diene having up to 6 carbon atoms (monomers II)
a₃₎ from 0 to 49.99% by weight of a C₁-C₁₂-alkyl ester of acrylic acid or of methacrylic acid (monomers III)
a₄₎ from 0.01 to 10% by weight of a bi- or polyfunctional non-conjugated monomer (monomers IV)
a₅₎ from 0 to 5% by weight of other monomers capable of free-radical polymerization (monomers V)
where the percentages by weight of a₁₎ to a₅₎ are based on the entirety of monomers used in stage A and give a total of 100% by weight,
B. followed by graft polymerization of from 20 to 80% by weight of a monomer mixture B which, together with the monomer mixtures A, C and D gives a total of 100% by weight, composed of
b₁₎ from 80 to 99.99% by weight of a C₁- to C₁₂ acrylate (monomers IIIa)
b₂₎ from 0 to 5% by weight of a monomer II
b₃₎ from 0.01 to 10% by weight of a monomer IV,
where the percentages by weight of b₁₎ to b₃₎ are based on the entirety of monomers used in stage B and give a total of 100% by weight,
C. followed by another graft polymerization of from 5 to 50% by weight of a monomer mixture C which, together with the monomer mixtures A, B, and D, gives a total of 100% by weight, composed of
c₁₎ from 51 to 98.99% by weight of a monomer I
c₂₎ from 0.01 to 10% by weight of a monomer IV
c₃₎ from 1 to 48.99% by weight of a monomer III
c₄₎ from 0 to 5% by weight of monomers capable of free-radical polymerization other than the monomers I, III, and IV,
where the percentages by weight of c₁₎ - c₄₎ are based on the entirety of monomers used in stage C and give a total of 100% by weight, and also
D. followed by another graft polymerization of from 5 to 30% by weight of a monomer mixture D which, together with the monomer mixtures A, B, and C gives a total of 100% by weight, composed of
d₁₎ from 80 to 100% by weight of at least one monomer III
d₂₎ from 0 to 20% by weight of at least one other monoethylenically unsaturated monomer,
d₃₎ from 0 to 10% by weight of a monomer I
d₄₎ from 0 to 5% by weight of a monomer IV
where the percentages by weight of d₁₎ to d₄₎ are based on the entirety of monomers used in stage D and give a total of 100% by weight, and
where the emulsion polymerization is carried out in the presence of more than 0.10% by weight, based on the entirety of monomers used in stages A to D, of at least one neutralizing agent, where the emulsion polymerization processes of stages A and B may also be interchanged.

2. The emulsion copolymer according to claim 1, wherein the neutralizing agent used comprises at least one compound from the group of sodium hydroxide solution, potassium hydroxide solution, sodium carbonate, potassium carbonate, sodium hydrogencarbonate, potassium hydrogencarbonate, ammonia, ammonium carbonate, ammonium hydrogencarbonate, and amines.

3. The emulsion copolymer according to claim 1 or 2, wherein the amount of neutralizing agent is from 0.11 to 1.0% by weight, based on the entirety of monomers used in stages A to D.

4. The emulsion copolymer according to any of claims 1 to 3, wherein the amount of emulsifier is at most 2.1 % by weight, based on the entirety of monomers used in stages A to D.

5. The emulsion copolymer according to any of claims 1 to 4, wherein the amount of emulsifier is at most 1.9% by weight, based on the entirety of monomers used in stages A to D.

6. The emulsion copolymer according to any of claims 1 to 5, wherein the monomers I used comprise styrene and the monomers IV used comprise allyl methacrylate.

7. The emulsion copolymer according to any of claims 1 to 6, wherein the acrylates (monomers III and IIIa) used comprise n-butyl acrylate.

8. A process for the preparation of emulsion copolymers according to claims 1 to 7, where the polymerization stages A-D are executed in succession,
A. emulsion polymerization of from 10 to 50% by weight of a monomer mixture A which, together with the monomer mixtures B and C gives a total of 100% by weight, composed of
a₁₎ from 50 to 99.99% by weight of styrene or of its ring-substituted derivatives (monomers I)
a₂₎ from 0 to 5% by weight of an aliphatic conjugated diene having up to 6 carbon atoms (monomers II)
a₃₎ from 0 to 49.99% by weight of a C₁-C₁₂-alkyl ester of acrylic acid or of methacrylic acid (monomers III)
a₄₎ from 0.01 to 10% by weight of a bi- or polyfunctional non-conjugated monomer (monomers IV)
a₅₎ from 0 to 5% by weight of other monomers capable of free-radical polymerization (monomers V)
where the percentages by weight of a₁₎ to a₅₎ are based on the entirety of monomers used in stage A and give a total of 100% by weight,
B. followed by graft polymerization of from 20 to 80% by weight of a monomer mixture B which, together with the monomer mixtures A and C gives a total of 100% by weight, composed of
b₁₎ from 80 to 99.99% by weight of an acrylate (monomers IIIa)
b₂₎ from 0 to 5% by weight of a monomer II
b₃₎ from 0.01 to 10% by weight of a monomer IV,
where the percentages by weight of b₁₎ to b₃₎ are based on the entirety of monomers used in stage B and give a total of 100% by weight,
C. followed by another graft polymerization of from 5 to 50% by weight of a monomer mixture C which, together with the monomer mixtures A, B, and D, gives a total of 100% by weight, composed of
c₁₎ from 51 to 98.99% by weight of a monomer I
c₂₎ from 0.01 to 10% by weight of a monomer IV
c₃₎ from 1 to 48.99% by weight of a monomer III
c₄₎ from 0 to 5% by weight of monomers capable of free-radical polymerization other than the monomers I, I and IV,
where the percentages by weight of c₁₎ - c₄₎ are based on the entirety of monomers used in stage C and give a total of 100% by weight, and
D. followed by another graft polymerization of from 5 to 30% by weight of a monomer mixture D which, together with the monomer mixtures A, B, and C gives a total of 100% by weight, composed of
d₁₎ from 80 to 100% by weight of at least one monomer III
d₂₎ from 0 to 20% by weight of at least one other monoethylenically unsaturated monomer,
d₃₎ from 0 to 10% by weight of a monomer I
d₄₎ from 0 to 5% by weight of a monomer IV
where the percentages by weight of d₁₎ to d₄₎ are based on the entirety of monomers used in stage D and give a total of 100% by weight, and
where the emulsion polymerization is carried out in the presence of more than 0.10% by weight, based on the entirety of monomers used in stages A to D, of at least one neutralizing agent.

9. The process according to claim 8, wherein the emulsion polymerization in stages A, B, C, and D is executed at temperatures of from 3 to 90°C.

10. The process according to claim 8, wherein the emulsion polymerization in stages A, B, C, and D is executed at temperatures of from 40 to 80°C.

11. The use of the emulsion copolymers according to claims 1 to 7 as additives in polyvinyl halide resin compositions for improving toughness.

12. A thermoplastic molding composition composed of polyvinyl halides, comprising from 1 to 40% by weight of the emulsion copolymers according to claims 1 to 7.

## Revendications

1. Copolymères en émulsion qu'on obtient par :
A. polymérisation en émulsion de 10 à 50 % en poids d'un mélange de monomères A, qui fait, avec les mélanges de monomères B, C et D, en tout 100 % en poids, composé de :
a₁) 50 à 99,99 % en poids de styrène ou de ses dérivés substitués au noyau (monomères I)
a₂) 0 à 5 % en poids d'un diène aliphatique conjugué avec jusque 6 atomes de carbone (monomères II)
a₃) 0 à 49,99 % en poids d'un alkylester en C₁-C₁₂ de l'acide acrylique ou de l'acide méthacrylique (monomères III)
a₄) 0,01 à 10 % en poids d'un monomère non conjugué bi- ou polyfonctionnel (monomères IV)
a₅) 0 à 5 % en poids d'autres monomères polymérisables par radicaux libres (monomères V)
les % en poids a₁) à a₅) se rapportant à la quantité totale des monomères utilisés à l'étape A et faisant en tout 100 % en poids,
B. polymérisation par greffe consécutive de 20 à 80 % en poids d'un mélange de monomères B, qui fait, avec les mélanges de monomères A, C et D, en tout 100 % en poids, composé de :
b₁) 80 à 99,99 % en poids d'un ester d'acide acrylique en C₁-C₁₂ (monomères IIIa)
b₂) 0 à 5 % en poids d'un monomère II
b₃) 0,01 à 10 % en poids d'un monomère IV,
les % en poids b₁) à b₃) se rapportant à la quantité totale des monomères utilisés à l'étape B et faisant en tout 100 % en poids,
C. une autre polymérisation par greffe consécutive de 5 à 50 % en poids d'un mélange de monomères C, qui fait, avec les mélanges de monomères A, B et D, en tout 100 % en poids, composé de :
c₁) 51 à 98,99 % en poids d'un monomère I
c₂) 0,01 à 10 % en poids d'un monomère IV
c₃) 1 à 48,99 % en poids d'un monomère III
c₄) 0 à 5 % en poids d'autres monomères polymérisables par des radicaux libres qui sont différents des monomères I, III et IV,
les % en poids c₁) à c₄) se rapportant à la quantité totale des monomères utilisés à l'étape C et faisant en tout 100 % en poids, ainsi que
D. une autre polymérisation par greffe consécutive de 5 à 30 % en poids d'un mélange de monomères D, qui fait, avec les mélanges de monomères A, B et C, en tout 100 % en poids, composé de :
d₁) 80 à 100 % en poids d'au moins un monomère III
d₂) 0 à 20 % en poids d'au moins un autre monomère monoéthyléniquement insaturé,
d₃) 0 à 10 % en poids d'un monomère I
d₄) 0 à 5 % en poids d'un monomère IV
les % en poids d₁) à d₄) se rapportant à la quantité totale des monomères utilisés à l'étape D et faisant en tout 100 % en poids, et
la polymérisation en émulsion ayant lieu en présence de plus de 0,10 % en poids, sur base des monomères utilisés en tout dans les étapes A à D, d'au moins un agent de neutralisation
les polymérisations en émulsion des étapes A et B pouvant être permutées l'une avec l'autre.

2. Copolymères en émulsion selon la revendication 1, **caractérisés en ce qu'**on utilise comme agents de neutralisation au moins un composé du groupe des soude caustique, lessive de potasse, carbonate de sodium, carbonate de potassium, hydrogénocarbonate de sodium, hydrogénocarbonate de potassium, ammoniac, carbonate d'ammonium, hydrogénocarbonate d'ammonium et des amines.

3. Copolymères en émulsion selon la revendication 1 ou 2, **caractérisés en ce que** la quantité d'agent de neutralisation va de 0,11 à 1,0 % en poids, sur base des monomères utilisés en tout aux étapes A à D.

4. Copolymères en émulsion selon l'une des revendications 1 ou 3, **caractérisés en ce que** la quantité d'émulsionnant est de tout au plus 2,1 % en poids, sur base des monomères utilisés en tout aux étapes A à D.

5. Copolymères en émulsion selon l'une des revendications 1 à 4, **caractérisés en ce que** la quantité d'émulsionnant est de tout au plus 1,9 % en poids, sur base des monomères utilisés en tout aux étapes A à D.

6. Copolymères en émulsion selon l'une des revendications 1 à 5, **caractérisés en ce qu'**on utilise comme monomères I du styrène et comme monomères IV de l'allyméthacrylate.

7. Copolymères en émulsion selon l'une des revendications 1 à 6, **caractérisés en ce qu'**on utilise comme ester d'acide acrylique (monomères III et IIIa) du n-butylacrylate.

8. Procédé de fabrication de copolymères en émulsion selon les revendications 1 à 7, dans lequel on entreprend les étapes de polymérisation A-D l'une après l'autre,
A. polymérisation en émulsion de 10 à 50 % en poids d'un mélange de monomères A, qui fait, avec les mélanges de monomères B et C, en tout 100 % en poids, composé de :
a₁) 50 à 99,99 % en poids de styrène ou de ses dérivés substitués au noyau (monomères I)
a₂) 0 à 5 % en poids d'un diène aliphatique conjugué avec jusque 6 atomes de carbone (monomères II)
a₃) 0 à 49,99 % en poids d'un alkylester en C₁-C₁₂ de l'acide acrylique ou de l'acide méthacrylique (monomères III)
a₄) 0,01 à 10 % en poids d'un monomère non conjugué bi- ou polyfonctionnel (monomères IV)
a₅) 0 à 5 % en poids d'autres monomères polymérisables par radicaux libres (monomères V),
les % en poids a₁) à a₅) se rapportant à la quantité totale des monomères utilisés à l'étape A et faisant en tout 100 % en poids,
B. polymérisation par greffe consécutive de 20 à 80 % en poids d'un mélange de monomères B, qui fait, avec les mélanges de monomères A et C en tout 100 % en poids, composé de :
b₁) 80 à 99,99 % en poids d'un ester d'acide acrylique (monomères IIIa)
b₂) 0 à 5 % en poids d' un monomère II
b₃) 0,01 à 10 % en poids d'un monomère IV
les % en poids b₁) à b₃) se rapportant à la quantité totale des monomères utilisés à l'étape B et faisant en tout 100 % en poids,
C. une autre polymérisation par greffe consécutive de 5 à 50 % en poids d'un mélange de monomères C, qui fait, avec les mélanges de monomères A, B et D, en tout 100 % en poids, composé de :
c₁) 51 à 98,99 % en poids d'un monomère I
c₂) 0,01 à 10 % en poids d'un monomère IV
c₃) 1 à 48,99 % en poids d'un monomère III
c₄) 0 à 5 % en poids d'autres monomères polymérisables par des radicaux libres qui sont différents des monomères I, II et IV,
les % en poids c₁) à c₄) se rapportant à la quantité totale des monomères utilisés à l'étape C et faisant en tout 100 % en poids, ainsi que
D. une autre polymérisation par greffe consécutive de 5 à 30 % en poids d'un mélange de monomères D, qui fait, avec les mélanges de monomères A, B et C, en tout 100 % en poids, composé de :
d₁) 80 à 100 % en poids d'au moins un monomère III
d₂) 0 à 20 % en poids d'au moins un autre monomère monoéthyléniquement insaturé,
d₃) 0 à 10 % en poids d'un monomère I
d₄) 0 à 5 % en poids d'un monomère IV
les % en poids d₁) à d₄) se rapportant à la quantité totale des monomères utilisés à l'étape D et faisant en tout 100 % en poids,
la fabrication des copolymères en émulsion ayant lieu en présence de plus de 0,10 % en poids, sur base des monomères utilisés en tout aux étapes A à D, d'au moins un agent de neutralisation.

9. Procédé selon la revendication 8, **caractérisé en ce qu'**on exécute la polymérisation en émulsion aux étapes A, B, C et D à des températures de 3 à 90 °C.

10. Procédé selon la revendication 8, **caractérisé en ce qu'**on exécute la polymérisation en émulsion aux étapes A, B, C et D à des températures de 40 à 80 °C.

11. Utilisation des copolymères en émulsion selon les revendications 1 à 7 comme additifs dans la composition de résine d'halogénure de polyvinyle pour améliorer la résistance aux chocs.

12. Masses de moulage thermoplastiques d'halogénures de polyvinyle contenant de 1 à 40 % en poids des copolymères en émulsion selon les revendications 1 à 7.
